# EUROPEAN PATENT APPLICATION

(11) **EP 4 629 128 A1**
(43) Date of publication of application: **08.10.2025**
(21) Application number: 24909206.5
(22) Date of filing: 04.06.2024
(51) Int. Cl.: G06F 30/367

(54) **CHIP PERFORMANCE AND POWER CONSUMPTION ANALYSIS METHOD AND APPARATUS, STORAGE MEDIUM, AND COMPUTER DEVICE**

(30) Priority: 28.12.2023 CN 202311846245
(71) Applicant: Hygon Information Technology Co., Ltd., Tianjin 300392 (CN)
(72) Inventor: XUE, Xiaodi, Tianjin 300392 (CN); CHEN, Quan, Tianjin 300392 (CN)
(74) Representative: Maiwald GmbH
(86) International application number: PCT/CN2024/097166
(87) International publication number: WO 2025/138593

(57) **Abstract**

The embodiment of the disclosure provides an analysis method for chip performance and chip power consumption, an apparatus, a storage medium and a computer device. And the analysis method for chip performance and chip power consumption includes: obtaining, through simulating the standard unit model, a first influence parameter set for influence of various types of transistors on standard unit performance and standard unit power consumption under different product device target values; obtaining, according to the first influence parameter set and a standard unit use ratio, a second influence parameter set for influence of the various types of transistors on the chip performance and chip power consumption; and obtaining, according to the second influence parameter set and use ratios of different types of transistors, a third influence parameter set for influence of the different product device target values on the chip performance and chip power consumption, and judging influence of a product device target value on the chip performance and power consumption. Embodiments of the present disclosure make resource consumption decrease during chip performance analysis before a chip sample is obtained, and make test data decrease during chip performance analysis, so as to ensure reducing resources input for chip performance analysis at the initial stage of manufacturing chips on the premise of ensuring timeliness.

## Description

This application claims the priority of the Chinese patent application No. 202311846245.1 filed on December 28, 2023. The entire contents disclosed in the aforementioned Chinese patent application are hereby incorporated by reference as part of this application.

### TECHNICAL FIELD

Embodiments of the present disclosure relate to a chip performance and power consumption analysis method and apparatus, a storage medium, and a computer device.

### BACKGROUND

When chip performance analysis is performed at the initial stage of manufacturing chips, a large amount of post-silicon data is required for supporting judgment, and many resources need to be input at the initial stage of manufacturing chips. However, timeliness is poor when there is a large amount of test data, and the completeness and coverage rate of a pre-silicon test program are not sufficiently high at present. Therefore, how to reduce resources input for chip performance analysis at the initial stage of manufacturing chips on the premise of ensuring timeliness has become a problem that urgently needs to be resolved by persons skilled in the art.

### SUMMARY

In view of this, embodiments of the present disclosure provide an analysis method for chip performance and apparatus, a storage medium, and a computer device, to ensure reducing resources input for chip performance analysis at the initial stage of manufacturing chips on the premise of ensuring timeliness.

To achieve the foregoing objective, embodiments of the present disclosure provide the following technical solutions.

The embodiment of the disclosure provides an analysis method for chip performance, includes:
constructing a standard unit model for simulating a to-be-analyzed chip standard unit;
obtaining, through simulating the standard unit model, and simulating adjustment of a product device target value, a first influence parameter set for influence of various types of transistors on standard unit performance and standard unit power consumption under different product device target values; obtaining, according to the first influence parameter set and a standard unit use ratio, a second influence parameter set for influence of the various types of transistors on the chip performance and chip power consumption under the different product device target values; and
obtaining, according to the second influence parameter set and use ratios of different types of transistors, a third influence parameter set for influence of the different product device target values on the chip performance and chip power consumption, in which the third influence parameter set is used to determine influence of product device target value on the chip performance and chip power consumption.

Optionally, the first influence parameter set includes: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation. Optionally, the standard unit performance includes: a standard unit frequency; and the standard unit power consumption includes: standard unit static power consumption and standard unit dynamic power consumption.

Optionally, the obtaining, through simulating the standard unit model, and simulating adjustment of a product device target value, a first influence parameter set for influence of various types of transistors on standard unit performance and standard unit power consumption under different product device target values includes:
through detecting a standard performance parameter value and a standard power consumption parameter value of a standard unit under the standard threshold voltage, simulating the standard performance parameter value and the standard power consumption parameter value of the standard unit under a standard product device target value; and
adjusting a threshold voltage of a transistor in the standard unit model, detecting a general performance parameter value and a general power consumption parameter value of the standard unit under threshold voltage variation with different amplitudes, and obtaining the first influence parameter set.

Optionally, the standard unit use ratio includes: a use proportion of the standard unit in the chip or a use proportion of the standard unit in a key path of the chip.

Optionally, the use ratios of the different types of transistors include: use ratios of the different types of transistors in all transistors of the chip, or use ratios of the different types of transistors in the key path of the chip.

Optionally, the third influence parameter set includes: a dynamic power consumption influence parameter set;
the dynamic power consumption influence parameter set includes: a dynamic power consumption standard value of the chip under the standard threshold voltage, and a general dynamic power consumption parameter set of dynamic power consumption of the chip during the threshold voltage variation; and
the obtaining, according to the second influence parameter set and the use ratios of the different types of transistors, the third influence parameter set for influence of the different product device target values on the chip performance includes:
   obtaining the dynamic power consumption influence parameter set according to the second influence parameter set and the use ratios of the different types of transistors.

Optionally, the use ratios of the different types of transistors further include: a chip power consumption ratio set.

Optionally, the third influence parameter set includes: a static power consumption influence parameter set,
the static power consumption influence parameter set includes: a static power consumption standard value of the chip under the standard threshold voltage, and a general static power consumption parameter set of static power consumption of the chip during the threshold voltage variation; and
the obtaining, according to the second influence parameter set and the use ratios of the different types of transistors, the third influence parameter set for influence of the different product device target values on the chip performance includes:
   obtaining the static power consumption influence parameter set according to the second influence parameter set and the use ratios of the different types of transistors.

Optionally, the third influence parameter set includes: a frequency influence parameter set;
the frequency influence parameter set includes: a frequency standard value of the chip under the standard threshold voltage, and a general frequency parameter set of a frequency of the chip during the threshold voltage variation; and
the obtaining, according to the second influence parameter set and the use ratios of the different types of transistors, the third influence parameter set for influence of the different product device target values on the chip performance includes:
   obtaining the frequency influence parameter set according to the second influence parameter set and the use ratios of the different types of transistors in the key path of the chip.

Optionally, it also includes drawing a two-dimensional contour map using the third influence parameter set, to display influence of the different types of transistors on the chip performance.

The embodiment of the present disclosure also provides an analysis apparatus for chip performance, including:
a model construction module, configured to construct a standard unit model for simulating a to-be-analyzed chip standard unit;
a first parameter set obtaining module, configured to obtain, through simulate the standard unit model, and simulate adjustment of a product device target value, a first influence parameter set for influence of various types of transistors on standard unit performance and standard unit power consumption under different product device target values;
a second parameter set obtaining module, configured to obtain, according to the first influence parameter set and a standard unit use ratio, a second influence parameter set for influence of the various types of transistors on the chip performance and chip power consumption under the different product device target values; and
a third parameter set obtaining module, configured to obtain, according to the second influence parameter set and use ratios of different types of transistors, a third influence parameter set for influence of the different product device target values on the chip performance and chip power consumption, in which the third influence parameter set is used to determine influence of product device target value on the chip performance and power consumption.

Optionally, the first influence parameter set includes: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation.

Optionally, the first parameter set obtaining module includes:
a standard parameter value obtaining module, configured to through detect a standard performance parameter value and a standard power consumption parameter value of a standard unit under the standard threshold voltage, simulate the standard performance parameter value and the standard power consumption parameter value of the standard unit under a standard product device target value.
a change parameter value obtaining module, configured to: adjust a threshold voltage of a transistor in the standard unit model, and detect a general performance parameter value and a general power consumption parameter value of the standard unit under threshold voltage variation with different amplitudes, and obtain the first influence parameter set.

Optionally, the use ratios of the different types of transistors include: use ratios of the different types of transistors in all transistors of the chip, or use ratios of the different types of transistors in the key path of the chip.

Optionally, the third influence parameter set includes: a dynamic power consumption influence parameter set,
the dynamic power consumption influence parameter set includes: a dynamic power consumption standard value of the chip under the standard threshold voltage, and a general dynamic power consumption parameter set of dynamic power consumption of the chip during the threshold voltage variation; and
the third parameter set obtaining module includes a dynamic power consumption obtaining module, configured to obtain the dynamic power consumption influence parameter set according to the second influence parameter set and the use ratios of the different types of transistors.

Optionally, the third influence parameter set includes: a static power consumption influence parameter set,
the static power consumption influence parameter set includes: a static power consumption standard value of the chip under the standard threshold voltage, and a general static power consumption parameter set of static power consumption of the chip during the threshold voltage variation; and
the third parameter set obtaining module includes: a static power consumption obtaining module, configured to obtain the static power consumption influence parameter set according to the second influence parameter set and the use ratios of the different types of transistors.

Optionally, the third influence parameter set includes: a frequency influence parameter set,
the frequency influence parameter set includes: a frequency standard value of the chip under the standard threshold voltage, and a general frequency parameter set of a frequency of the chip during the threshold voltage variation; and
the third parameter set obtaining module includes a frequency obtaining module, configured to obtain the frequency influence parameter set according to the second influence parameter set and the use ratios of the different types of transistors in the key path of the chip.

Optionally, further includes: a drawing module, configured to draw a two-dimensional contour map using the third influence parameter set.

The embodiment of the present disclosure also provides a storage medium which stores a design program of a chip, and when the design program is executed, the analysis method for chip performance described above is realized.

The embodiment of the present disclosure also provides a computer device, including the analysis apparatus for chip performance as described above.

In the analysis method for chip performance provided in embodiments of the present disclosure, a standard unit model for simulating a to-be-analyzed chip standard unit is first constructed, and the standard unit model is simulated, to obtain a first influence parameter set for influence of transistors on performance of the standard unit. To obtain influence of the transistors on the chip performance, a second influence parameter set is then obtained according to the first influence parameter set and a use ratio of the standard unit. Finally, to obtain influence of different types of transistors on the chip performance, a third influence parameter set is obtained according to the second influence parameter set and use ratios of the different types of transistors, to determine the influence of the different types of transistors on the chip performance.

In view of this, only the standard unit with low resource consumption during simulation is simulated, and then the influence of the transistors on the chip performance and power consumption is obtained, and next, the influence of the different types of transistors on the chip performance and power consumption is obtained. To be specific, a complete chip with high resource consumption is not simulated, but the standard unit with low resource consumption is simulated, and influence of different product device target values on the chip performance and power consumption is obtained based on use ratios of the transistors, the standard unit, and the chip, to reduce resource consumption during chip performance and power consumption analysis before the chip sample is obtained, and reduce test data during chip performance analysis, so as to reduce resources input for chip performance analysis at the initial stage of manufacturing the chip on the premise of ensuring timeliness.

### BRIEF DESCRIPTION OF DRAWINGS

To more clearly illustrate the technical solutions of the embodiments of the present disclosure, a brief introduction will be provided below regarding the accompanying drawings required in the description of the embodiments. Evidently, the drawings described below represent only specific embodiments of the present disclosure. For those of ordinary skill in the art, other drawings may be derived from the provided figures without creative effort.
FIG. 1 is a schematic diagram of distribution of product device target values of a chip;
FIG. 2 is a schematic flowchart of an analysis method for chip performance according to an embodiment of the present disclosure;
FIG. 3 is another schematic flowchart of an analysis method for chip performance according to an embodiment of the present disclosure;
FIG. 4a and FIG. 4b are schematic diagrams of a two-dimensional contour map drawn according to an analysis method for chip performance according to an embodiment of the present disclosure;
FIG. 5 is a schematic diagram of obtaining a ratio in an analysis method for chip performance according to an embodiment of the present disclosure;
FIG. 6a, FIG. 6b, and FIG. 6c are schematic diagrams of another set of two-dimensional contour maps by using an analysis method for chip performance according to an embodiment of the present disclosure;
FIG. 7a, FIG. 7b, FIG. 7c, and FIG. 7d are schematic diagrams of a coordinate graph drawn according to data in an analysis method for chip performance according to an embodiment of the present disclosure;
FIG. 8 is a schematic diagram of chip power consumption analysis;
FIG. 9 is a schematic structural diagram of an analysis apparatus for chip performance according to an embodiment of the present disclosure; and
FIG. 10 is another schematic structural diagram of an analysis apparatus for chip performance according to an embodiment of the present disclosure.

### DETAILED DESCRIPTION

The following clearly and completely describes the technical solutions in embodiments of the present disclosure with reference to the accompanying drawings in embodiments of the present disclosure. Apparently, the described embodiments are merely some rather than all of the embodiments of the present disclosure. Based on embodiments of the present disclosure, all other embodiments obtained by a person of ordinary skill in the art without creative efforts fall within the protection scope of the present disclosure.

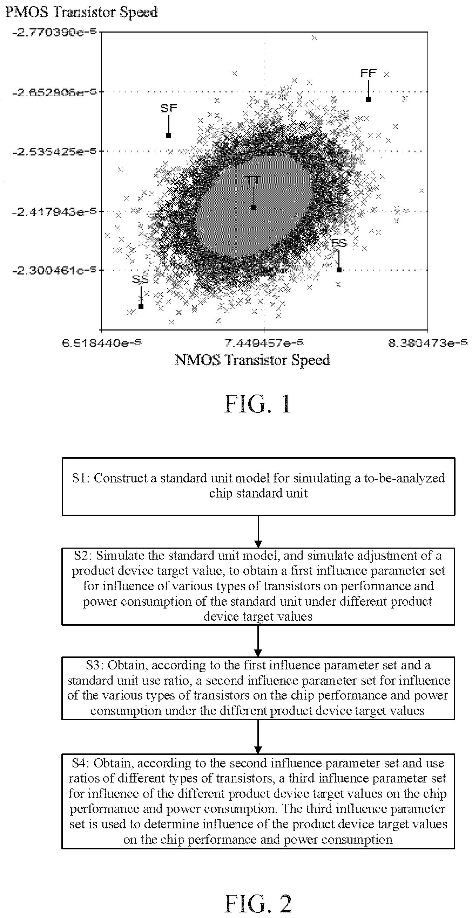

A product device target value (Device Target) is a key indicator for communication between a chip designer and a foundry for production. In actual production, drive current values of a chip transistor are normally distributed around a product device target value. Further, a drive current of a chip transistor is related to a threshold voltage used by the transistor. A smaller drive current of the transistor indicates a higher threshold voltage of the transistor, and a larger drive current of the transistor indicates a lower threshold voltage of the transistor. It should be noted that, the "product" in the product device target value means a chip, and the "device" means a transistor. FIG. 1 shows chip anchor points, and a schematic diagram of distribution. Horizontal coordinates in the figure represent drive current values of different NMOS (Negative channel-Metal-Oxide-Semiconductor) transistors, and vertical coordinates represent drive current values of different PMOS (Positive channel-Metal-Oxide-Semiconductor) transistors. A coordinate corresponding to each crosspoint in the figure represents a drive current value of a transistor used by a different chip. Drive current values of an NMOS and a PMOS that correspond to a center point of an area with most dense crosspoints in the figure, namely, a TT point, are product device target values of the chip, and SF, FF, SS, and FS are four process corners of the chip. A process corner is a range of drive current values of transistors. In addition, a drive current value of a transistor further affects performance and power consumption of the transistor. Therefore, the product device target value affects performance and power consumption of the transistor. The performance of the transistor includes a frequency of the transistor. Further, a chip is composed of transistors. Therefore, performance and power consumption of the transistor also affect performance and power consumption of the chip, and the product device target value also affects performance and power consumption of the chip.

Because the product device target value affects overall use design of the transistors in the chip, it is of particular significance to determine the product device target value. A method for determining the product device target value uses a device-level, namely, a transistor-level WAT (Wafer Acceptance Test) parameter as a standard, and the WAT is a test performed on a dedicated test pattern, to obtain an electrical parameter that represents performance of the device. However, it is difficult to intuitively pre-estimate overall performance of a complete chip based on the device-level WAT parameter.

In addition, in an actual production and manufacturing process, different requirements are usually imposed on chip performance and power consumption due to a change of a market requirement, and therefore the product device target value needs to be adjusted. Using the chip power consumption as an example, if the chip is a high-performance computing chip, the chip is usually used under a high temperature and high pressure. In addition, as process nodes evolve, a proportion of static power consumption increases, and a requirement for power consumption also increases accordingly. Therefore, it is more necessary to determine the product device target value based on a requirement, to meet strict performance requirements and power consumption requirements.

Main factors to be considered for a method for adjusting a product device target value include influence of the product device target value on a yield rate of the chip, and influence on chip performance and power consumption. The influence of the product device target value on the yield rate of the chip may be intuitively determined by using an EDA (electronic design automation) tool, and a correlation between the WAT parameter and the influence of the product device target value on chip performance and power consumption is weak. Therefore, in a method for adjusting the product device target value, the product device target value is usually adjusted based on experience of developers or intuition of the developers for the device in combination with the correlation of test data, to meet product requirements.

Because a process of subjective judgment based on many personal factors exists in the foregoing method for adjusting the product device target value, objectivity and professionalism of the adjustment method are poor. Therefore, there is another method for adjusting the product device target value. After a sample of the chip is actually produced, the sample of the chip is tested, and the product device target value is adjusted according to data obtained after the test.

According to the foregoing method for adjusting the product device target value, after the sample of the chip is produced, the sample is tested. Because the adjustment of the product device target value requires massive test data for supporting judgment, many resources need to be put at the initial stage of manufacturing the chip. In addition, at the initial stage of manufacturing the chip, completeness and coverage rate of a test program for the sample of the chip may be not sufficiently high, and the program needs to be perfected, resulting in poor timeliness of the test.

Based on this, in embodiments of the present disclosure, a chip model in a design is simulated, and a basic concept PPA (power, performance, and area) in process evaluation is introduced into the adjustment process of the product device target value, to quantitatively reflect influence of the adjustment of the product device target value on the overall performance and power consumption of the chip, so as to adjust the product device target value according to quantitative data, thereby reducing resources input in the adjustment process of the product device target value at the initial stage of manufacturing the chip on the premise of ensuring timeliness.

Based on the foregoing idea, embodiments of the present disclosure provide a chip performance and power consumption analysis method. In an optional implementation, FIG. 2 shows a schematic flowchart of a chip performance and power consumption analysis method according to an embodiment of the present disclosure. As shown in FIG. 2, the chip performance and power consumption analysis method provided in this embodiment of the present disclosure includes:
Step S1: Construct a standard unit model for simulating a to-be-analyzed chip standard unit.

It should be noted that, if circuit-level simulation is directly performed on a complete chip to obtain accurate performance and power consumption of the complete chip, in this method, because the circuit of the complete chip is excessively complex, an excessively large simulation scale is required, and it is difficult to implement. A complete chip is formed by combining a plurality of standard units. In an optional implementation, standard units include a NOT gate, an OR AND gate, a NAND gate, and a NOR gate. Performance and power consumption of each standard unit are fixed parameters, and circuit-level simulation may be performed on the standard unit, to obtain accurate performance and power consumption of the standard unit, and performance and power consumption of the complete chip are obtained through calculation according to the performance and power consumption of the standard unit. Then, data processing is performed on the performance and power consumption of the complete chip, so that parameters for influence of different types of transistors on various performance and power consumption of the chip can be obtained after the product device target value is adjusted.

In this way, the amount of data that needs to be obtained during test can be reduced by simulating the standard unit, so as to improve timeliness of chip performance analysis and power consumption analysis.

Step S2: Simulate the standard unit model, and simulate adjustment of a product device target value, to obtain a first influence parameter set for influence of various types of transistors on performance and power consumption of the standard unit under different product device target values. It should be noted that, the standard unit is composed of devices, namely, different transistors. Features of the transistors are affected by voltage thresholds thereof, and a performance parameter value of the standard unit and a power consumption parameter value of the standard unit after the product device target value is adjusted can be simulated by adjusting the threshold voltages of the transistors in the standard unit model. Therefore, in an optional implementation, the step of simulating the standard unit model, to obtain a first influence parameter set for influence of transistors on performance and power consumption of the standard unit, as shown in FIG, 3, includes:

Step S21: Detect the standard performance parameter value and the standard power consumption parameter value of the standard unit under the standard threshold voltage, to simulate the standard performance parameter value and the standard power consumption parameter value of the standard unit under a standard product device target value. Step S22: Adjust a threshold voltage of a transistor in the standard unit model, and detect the general performance parameter value and the general power consumption parameter value of the standard unit under threshold voltage changes with different amplitudes, to obtain the first influence parameter set. It should be noted that, a standard unit includes a plurality of different transistors. Therefore, in a process of adjusting the threshold voltages of the transistors in the standard unit model, a threshold voltage of each transistor needs to be separately adjusted, to further obtain performance and power consumption of the standard unit under different combinations of the threshold voltages of the transistors, thereby obtaining the first influence parameter set that reflects the performance and power consumption of the standard unit when the transistors are in different states.

Specifically, in an optional implementation, a method for implementing the foregoing steps S21 and S22 is traversing simulation. Traversing simulation is, for example, separately performing combined simulation on the NMOS transistor under the condition of 10 different threshold voltages, and on the PMOS transistor under the condition of 10 threshold voltages, to obtain simulation results of the two transistors under a total of 100 combinations of conditions. In this way, changes of the performance and power consumption of the standard unit under different product device target values can be simulated after the product device target value is adjusted.

Further, it can be learned based on the foregoing steps S21 and S22 that, in an optional implementation, the first influence parameter set includes: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation.

Further, to introduce the PPA concept to adjustment of the product device target value, because the area of the chip is determined, parameters that can represent the performance and power consumption of the chip need to be obtained, where performance of the chip may be determined based on a frequency of the transistor or standard unit. Therefore, in an optional implementation, the standard unit performance includes: a standard unit frequency; and the standard unit power consumption includes: standard unit static power consumption and standard unit dynamic power consumption.

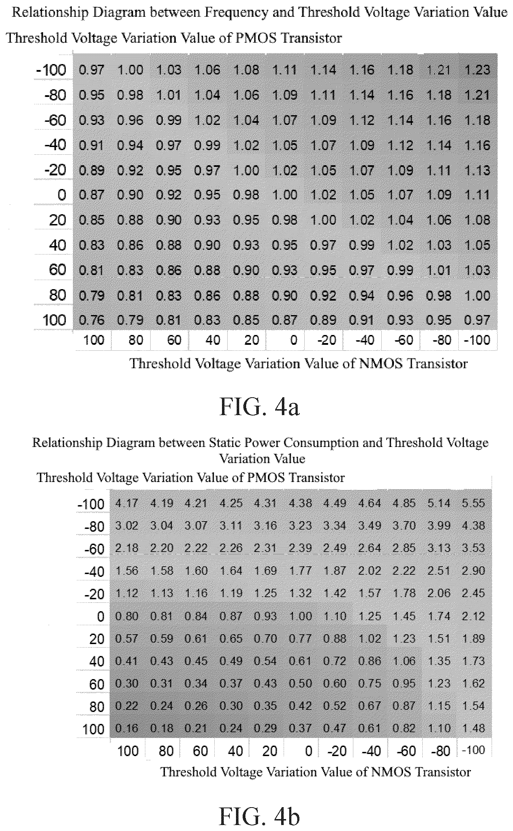

With reference to FIG. 4a and FIG. 4b, FIG. 4a is a diagram of a change relationship that is between a frequency and a threshold voltage and that is obtained based on the chip performance and power consumption detection method provided in the present disclosure. As shown in FIG. 4a, for the product device target value, the threshold voltages of the transistors in the standard unit model are adjusted, and change parameter values of the performance and power consumption of the standard unit under threshold voltage changes with different amplitudes relative to the standard parameter values, to obtain the first influence parameter set. For example, a point (0, 0) in the figure is a standard parameter value of the frequency of the standard unit. In this case, there is no change to the threshold voltage, and therefore, a change value of the threshold voltage is 0. For example, using (-20, 40) in the figure as an example, that is, when the threshold voltage of the NMOS transistor decreases by 20 mv relative to the standard threshold voltage, and the threshold voltage of the PMOS transistor increases by 40 mv relative to the standard threshold voltage, the value is a general frequency parameter value of the standard unit. FIG. 4b is a diagram of a change relationship that is between static power consumption and the threshold voltage and that is obtained based on the chip performance and power consumption detection method provided in the present disclosure. As shown in FIG. 4b, for the product device target value, the threshold voltages of the transistors in the standard unit model are adjusted, and change parameter values of the performance and power consumption of the standard unit under threshold voltage changes with different amplitudes relative to the standard parameter values, to obtain the first influence parameter set. For example, the point (0, 0) in the figure is a standard parameter value of the static power consumption of the standard unit. In this case, there is no change to the threshold voltage, and therefore, a change value of the threshold voltage is 0. For example, using (-20, 40) in the figure as an example, that is, when the threshold voltage of the NMOS transistor decreases by 20 mv relative to the standard threshold voltage, and the threshold voltage of the PMOS transistor increases by 40 mv relative to the standard threshold voltage, the value is a general static power consumption parameter value.

Still with reference to FIG. 2, the method further includes step S3: Obtain, according to the first influence parameter set and a standard unit use ratio, a second influence parameter set for influence of the various types of transistors on the chip performance and power consumption under the different product device target values. Further, in an optional implementation, the standard unit use ratio includes: a use proportion of the standard unit in the chip or a use proportion of the standard unit in a key path of the chip. It should be noted that, after the chip is powered on, all standard units in the chip are in a running state and have power consumption. Therefore, the power consumption of the chip may be obtained through calculation based on the use proportion of the standard unit in the chip and power consumption of each standard unit. In the chip, the frequency of the chip is related to a frequency of the key path that implements different functions of the chip. Therefore, the frequency of the chip may be obtained through calculation based on the use proportion of the standard unit in the key path of the chip and the frequency of the standard unit.

Further, the use ratio of the standard unit is a ratio obtained by dividing the quantity of each type of standard units that is obtained by counting all types of the standard units used in the chip by a total quantity of the standard units. Therefore, a sum of quantities of all the types of standard units is equal to the total quantity of the standard units, and a sum of use ratios of all the different types of standard units in all the transistors of the chip is 100%. For example, a chip includes 20 NOT gates, 50 OR AND gates, 45 NAND gates, and 25 NOR gates, 140 in total, and it may be calculated that the NOT gates occupy 14.3%, the OR AND gates occupy 35.7%, the NAND gates occupy 32.1%, and the NOR gates occupy 17.9%, 100% in total. Further, the first influence parameter set includes a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation, and the standard unit performance includes a standard unit frequency; and the standard unit power consumption includes: standard unit static power consumption and standard unit dynamic power consumption. Therefore, in an optional implementation, the second influence parameter set includes a standard chip performance parameter value of chip performance and a standard chip power consumption parameter value of the chip under a standard threshold voltage; and a general chip performance parameter value of chip performance and a general chip power consumption parameter value of chip power consumption during threshold voltage variation; the chip performance includes a chip frequency of the chip; and the chip power consumption includes: a chip static power consumption and a chip dynamic power consumption.

It should be noted that, weighted multiplication is performed on first influence parameter values of different types of standard units under each threshold voltage change value according to the use ratios of the standard units, so that the second influence parameter set for influence of the transistors on the chip performance and power consumption can be obtained. For example, under the standard threshold voltage, the first influence parameter value of the first standard unit * 45% + the first influence parameter value of the second standard unit * 30% + the first influence parameter value of the third standard unit * 15% + the first influence parameter value of the fourth standard unit * 10% = the second influence parameter set under the standard threshold voltage.

Step S4: Obtain, according to the second influence parameter set and use ratios of different types of transistors, a third influence parameter set for influence of the different product device target values on the chip performance and power consumption. The third influence parameter set is used to determine influence of the product device target values on the chip performance and power consumption.

It should be noted that, weighted multiplication is performed on second influence parameter values under each threshold voltage change value according to the use ratios of the different types of transistors, so that the third influence parameter set for influence of the transistors on the chip performance and power consumption can be obtained. For example, under the standard threshold voltage, the second influence parameter value of the first transistor * 45% + the second influence parameter value of the second transistor * 30% + the second influence parameter value of the third transistor * 15% + the second influence parameter value of the fourth transistor * 10% = the third influence parameter set under the standard voltage threshold.

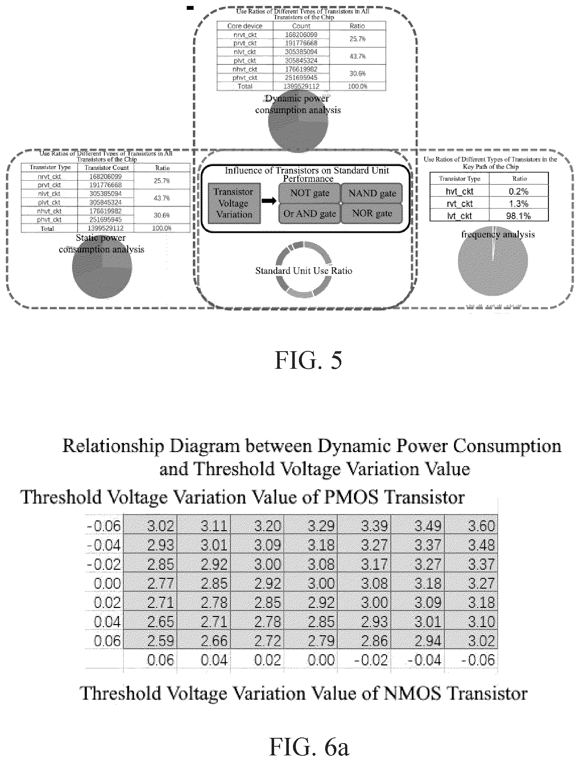

Further, as shown in FIG. 5, a solid-line box range in the center of FIG. 5 means that influence of the transistors on the performance and power consumption of the standard unit can be obtained by adjusting the threshold voltages of the transistors, that is, influence of the transistors in the chip on the NOT gates, OR AND gates, NAND gates, and NOR gates. Then, as shown by the five dashed-line boxes in FIG. 5, with reference to the influence of the transistors on the performance and power consumption of the standard unit, the use ratio of the standard unit, use ratios of different types of transistors in all the transistors of the chip, and use ratios of different types of transistors in the key path of the chip, two-level weighted multiplication is performed to determine influence of different product device target values on the chip performance and power consumption. It is determined, based on the influence of the transistors on the performance and power consumption of the standard unit and the use ratio of the standard unit, that the influence of the transistors on the chip performance and power consumption is first-level weighted calculation, and the static power consumption influence parameter set and the dynamic power consumption influence parameter set are determined based on the influence of the transistors on the chip performance and power consumption and the use ratios of the different types of transistors in all the transistors of the chip, and it is determined, based on the influence of the transistors on the chip performance and power consumption, and the use ratios of the different types of transistors in the key path of the chip, that the frequency influence parameter set is second-level weighted multiplication. It should be noted that, the use proportion of the standard unit in the chip, the use proportion of the standard unit in the key path of the chip, the use ratios of the different types of transistors in all the transistors of the chip, and the use ratios of the different types of transistors in the key path of the chip are parameters that can be determined when the chip is designed to obtain a complete chip circuit. It should be noted that, different requirements are posed on speeds of the NMOS transistor and the PMOS transistor at different positions in the chip. To make the running speed of the NMOS transistor different from that of the PMOS transistor under a same threshold voltage, a plurality of different NMOS transistors and a plurality of different PMOS transistors are disposed in the chip. The second influence parameter set is influence of the transistors on the chip performance and power consumption when all the transistors are considered as a whole. To further reflect influence of the different types of transistors on the chip when the product device target value is adjusted, the second influence parameter set needs to be combined with the use ratios of the different types of transistors, to obtain the third influence parameter set, thereby obtaining influence of the various types of transistors on the chip performance and power consumption under different threshold voltages.

Further, the frequency of the chip is related to the frequency of the key path that implements different functions of the chip. Therefore, the frequency of the chip may be obtained through calculation based on the use proportion of the standard unit in the key path of the chip and the frequency of the standard unit. In an optional implementation, the use ratios of the different types of transistors include: the use ratios of the different types of transistors in all transistors of the chip, or the use ratios of the different types of transistors in the key path of the chip.

Further, a method for obtaining the use proportion of the standard unit in the chip and the use proportion of the standard unit in the key path of the chip is shown in FIG. 5, and the use ratios of the different types of transistors in all the transistors of the chip are ratios obtained by dividing the quantity of each type of transistors that is obtained by counting all the types of the transistors used in the chip by a total quantity of the transistors. Therefore, a sum of quantities of all the types of transistors is equal to the total quantity of the transistors, and a sum of use ratios of all the different types of transistors in all the transistors of the chip is 100%. Using FIG. 5 as an example, the transistors in the chip include the following types: a total of 168206099 nrvt_ckt (standard threshold voltage NMOS) transistors, a total of 305385094 nlvt_ckt (low threshold voltage NMOS) transistors, a total of 176619982 nhvt_ckt (high threshold voltage NMOS) transistors, a total of 191776668 prvt_ckt (standard threshold voltage NMOS) transistors, a total of 305845324 plvt_ckt (low threshold voltage NMOS) transistors, and a total of 251695945 phvt_ckt (standard threshold voltage NMOS) transistors, and the total quantity of all the transistors is 1399529112. Therefore, the quantities of the different types of transistors may be divided by the total quantity of all the transistors, to obtain that the rvt_ckt (normal voltage device circuit) transistors occupy 25.7%, the hvt_ckt (high voltage device circuit) transistors occupy 30.6, and the lvt_ckt (low voltage device circuit) transistors occupy 43.7%, a total of 100% Further, the use ratios of the different types of transistors in the key path of the chip and the use ratio of the standard unit are obtained by using a same method technology. As shown in FIG. 5, the use ratios of the different types of transistors in the key path of the chip are the use ratios of the rvt_ckt, hvt_ckt, and lvt_ckt transistors.

It should be noted that, in the chip performance and power consumption analysis, common analysis indicators are the static power consumption of the chip, the dynamic power consumption of the chip, and the frequency of the chip. Therefore, the third influence parameter set includes parameter values related to the foregoing three analysis indicators.

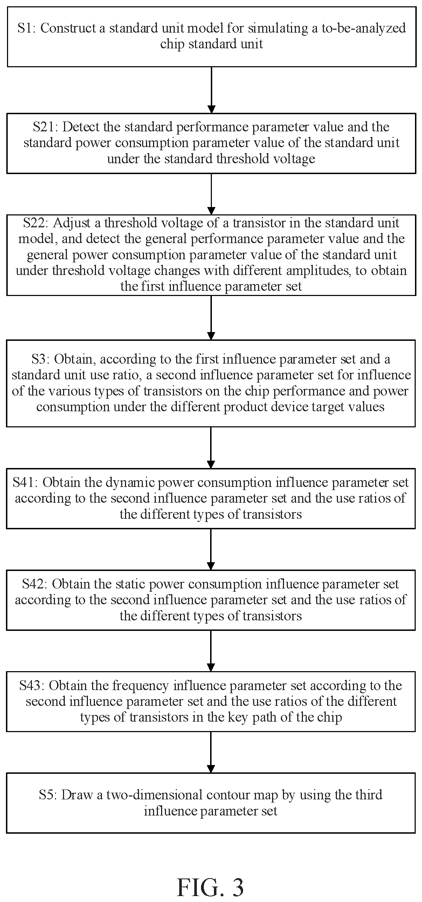

Further, in an optional implementation, the third influence parameter set includes: a dynamic power consumption influence parameter set, and the dynamic power consumption influence parameter set includes: a dynamic power consumption standard value of the chip under the standard threshold voltage, and a general dynamic power consumption parameter set of dynamic power consumption of the chip in the threshold voltage change. As shown in FIG. 3, step S4 includes step S41: Obtain the dynamic power consumption influence parameter set according to the second influence parameter set and the use ratios of the different types of transistors.

It should be noted that, in an optional implementation, the use ratios of the different types of transistors further include: a chip power consumption ratio set. Specifically, in an optional implementation, the chip power consumption ratio set includes: a proportion of the dynamic power consumption to the static power consumption of the chip, and a proportion of internal power consumption of the chip to net power consumption of the chip. For example, a ratio of the dynamic power consumption to the static power consumption is 3:1, and a proportion of the internal power consumption (Internal Power) of the chip to the net power consumption (net Power) of the chip is 3:2.

It should be noted that, weighted multiplication is performed on second influence parameter values under each threshold voltage change value according to the use ratios of the different types of transistors, so that the third influence parameter set for influence of the transistors on the chip performance and power consumption can be obtained. For example, under the standard threshold voltage, (the static power consumption influence parameter value of the first transistor * 45% + the static power consumption influence parameter value of the second transistor * 30% + the static power consumption influence parameter value of the third transistor * 15% + the static power consumption influence parameter value of the fourth transistor * 10%) * 3/2 * 3 = the dynamic power consumption influence parameter set under the standard threshold voltage. The obtained result is shown in FIG. 6a.

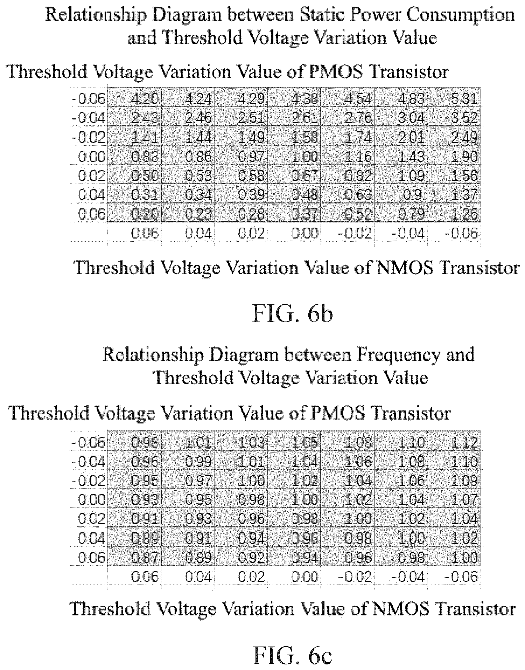

Further, in an optional implementation, the third influence parameter set includes: a static power consumption influence parameter set, and the static power consumption influence parameter set includes: a static power consumption standard value of the chip under the standard threshold voltage, and a general static power consumption parameter set of static power consumption of the chip in the threshold voltage change. As shown in FIG. 3, step S4 includes step S42: Obtain the static power consumption influence parameter set according to the second influence parameter set and the use ratios of the different types of transistors. It should be noted that, weighted multiplication is performed on the second influence parameter values under each threshold voltage change value according to the use ratios of the different types of transistors, so that the third influence parameter set for influence of the transistors on the chip performance and power consumption can be obtained. For example, under the standard threshold voltage, the static power consumption influence parameter value of the first transistor * 45% + the static power consumption influence parameter value of the second transistor * 30% + the static power consumption influence parameter value of the third transistor * 15% + the static power consumption influence parameter value of the fourth transistor * 10% = the static power consumption influence parameter set under the standard threshold voltage. The obtained result is shown in FIG. 6b.

Further, in an optional implementation, the third influence parameter set includes: a frequency influence parameter set, and the frequency influence parameter set includes: a frequency standard value of the chip under the standard threshold voltage, and a general frequency parameter set of a frequency of the chip in the threshold voltage change. As shown in FIG. 3, step S4 includes step S43: Obtain the frequency influence parameter set according to the second influence parameter set and the use ratios of the different types of transistors in the key path of the chip.

It should be noted that, weighted multiplication is performed on the second influence parameter values under each threshold voltage change value according to the use ratios of the different types of transistors, so that the third influence parameter set for influence of the transistors on the chip performance and power consumption can be obtained. For example, under the standard threshold voltage, the frequency influence parameter value of the first transistor * 45% + the frequency influence parameter value of the second transistor * 30% + the frequency influence parameter value of the third transistor * 15% + the frequency influence parameter value of the fourth transistor * 10% = the frequency influence parameter set under the standard voltage threshold. The obtained result is shown in FIG. 6c.

In this way, in the chip performance and power consumption analysis method provided in this embodiment of the present disclosure, only the standard unit with low resource consumption during simulation is simulated, and then the influence of the transistors on the chip performance and power consumption is obtained, and next, the influence of the different types of transistors on the chip performance and power consumption is obtained. To be specific, a complete chip with high resource consumption is not simulated, but the standard unit with low resource consumption is simulated, and influence of different product device target values on the chip performance and power consumption is obtained based on use ratios of the transistors, the standard unit, and the chip, to reduce resource consumption during chip performance analysis before the chip sample is obtained, and reduce test data during chip performance and power consumption analysis, so as to reduce resources input for chip performance analysis at the initial stage of manufacturing the chip on the premise of ensuring timeliness.

Further, as shown in FIG, 3, in an optional implementation, the chip performance and power consumption analysis method provided in the present disclosure further includes step S5: Draw a two-dimensional contour map by using the third influence parameter set, to display influence of the different types of transistors on the chip performance and power consumption. Because the third influence parameter set obtained through calculation is a set of data set, and the influence of the different types of transistors on the chip performance and power consumption cannot be directly determined based on parameter values in the third influence parameter set, and the influence needs to be determined based on a change relationship between the parameter values. Drawing a two-dimensional contour map by using the third influence parameter set can improve readability of the third influence parameter set, to facilitate judgment by using the third influence parameter set.

In an optional implementation, the foregoing parameter values may be directly obtained by using an EDA tool. In an optional implementation, a proportion of the dynamic power consumption to the static power consumption of the chip and a proportion of the net power to the internal power consumption of the chip are obtained by simulating another chip by using the EDA tool. It should be noted that, for chips with similar designs, proportions of the dynamic power consumption to the static power consumption of the chips and proportions of the net power to the internal power consumption of the chips are also similar, and therefore, a simulation result of another chip may be used for calculation.

Specifically, the two-dimensional contour maps obtained based on the chip performance and power consumption analysis method provided in this embodiment of the present disclosure include a diagram of a change relationship between dynamic power consumption and threshold voltages of transistors shown in FIG. 6a, a diagram of a change relationship between static power consumption and threshold voltages of transistors shown in FIG. 6b, and a diagram of a change relationship between a frequency and threshold voltages of transistors shown in FIG. 6c. Each piece of data with coordinates (0, 0) is a parameter value under the standard threshold voltage. The parameter value under the standard threshold voltage in the dynamic power consumption diagram in FIG. 5 is 3.00 of the point (0, 0); the parameter value under the standard threshold voltage in the dynamic power consumption diagram is 1.00 of the point (0, 0); and the parameter value under the standard threshold voltage in the frequency diagram is 1.00 of the point (0, 0). Influence of the different types of transistors on the chip performance and power consumption under different product device target values can be determined based on data in the three diagrams under same coordinates, so as to determine the product device target values on this basis. Using each point (-0.04, -0.02) in FIG. 4 as an example, a point value of (-0.04, -0.02) in the dynamic power consumption diagram is 3.27, a point value of (-0.04, -0.02) in the static power consumption diagram is 2.01, and a point value of (-0.04, -0.02) in the frequency diagram is 1.06. A difference between the point (-0.04, -0.02) and the point (0, 0) in the dynamic power consumption diagram is 0.27, a difference between the point (-0.04, -0.02) and the point (0, 0) in the static power consumption diagram is 1.01, and a difference between the point (-0.04, -0.02) and the point (0, 0) in the frequency diagram is 0.06, and the differences are respectively influences of the change of the threshold voltage of the transistor on the dynamic power consumption, the static power consumption, and the frequency of the chip. When the product device target value is determined, for example, if values of the point (-0.04, -0.02) in the diagrams better meet our expectation, we select performance and power consumption of the transistor as the product device target value when the transistor is under a condition in which the threshold voltage change value is (-0.04, -0.02).

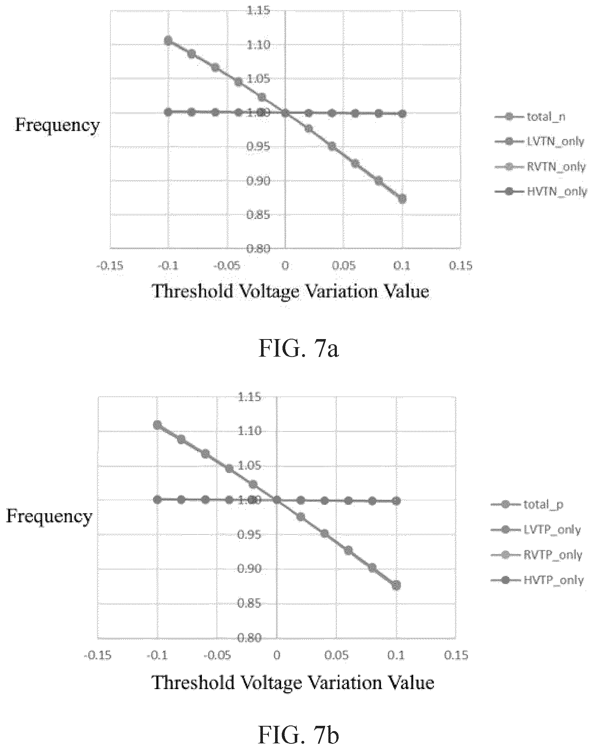

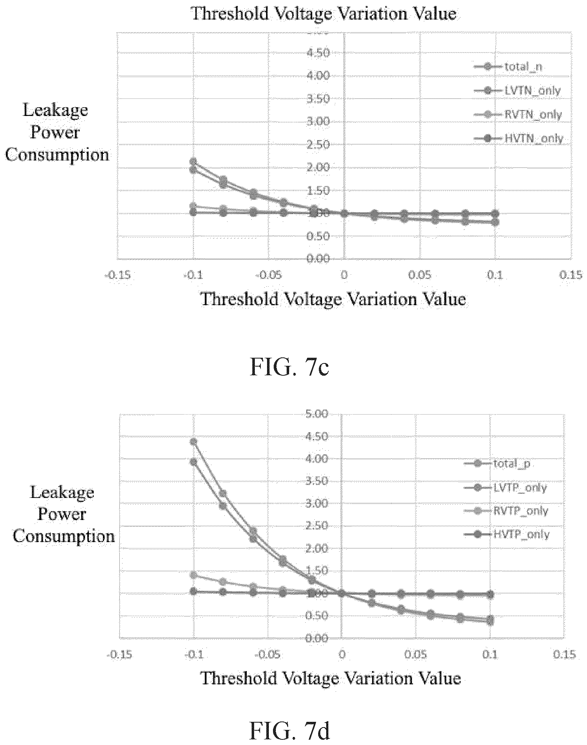

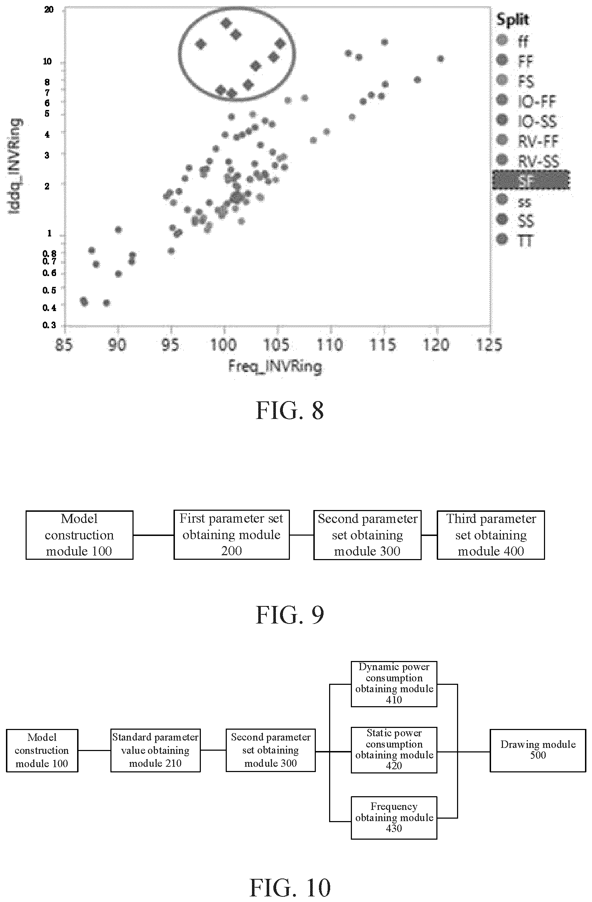

Specifically, to prove accuracy of the chip performance and power consumption analysis method provided in this embodiment of the present disclosure, using the diagram of the change relationship between the static power consumption and the threshold voltage and the diagram of the change relationship between the frequency and the threshold voltage that are shown in FIG. 4a and FIG. 4b as an example, first, a diagram of a relationship between frequencies of different types of transistors and threshold voltage change values and a diagram of a relationship between the static power consumption and the threshold voltage change values that are shown in FIG. 7a, FIG. 7b, FIG. 7c, and FIG. 7d are drawn based on the parameters in the diagrams. FIG. 7a is a diagram of a relationship between frequencies of different types of NMOS transistors and the threshold voltage change values, FIG. 7c is a diagram of a relationship between static power consumption of different types of NMOS transistors and the threshold voltage change values, FIG. 7b is a diagram of a relationship between frequencies of different types of PMOS transistors and the threshold voltage change values, and FIG. 7d is a diagram of a relationship between static power consumption of different types of PMOS transistors and the threshold voltage change values. Using the two diagrams of a relationship between the static power consumption and the threshold voltage change values in FIG. 7c and FIG. 7d as an example, when the threshold voltage change value is -0.04, it can be learned that static power consumption of the device is high when a speed of the PMOS transistor is high, but the speed of the NMOS transistor does not greatly affect the static power consumption, and it may be further determined that when the speed of the PMOS transistor is high and when the speed of the NMOS transistor is low, the static power consumption value of the chip is obviously large. Further, FIG. 8 is a data result obtained through test by using a sample of a chip with a same design. Electric leakage data of an SF process corner is in the circle. It can be learned that, static power consumption of the SF process corner is obviously large compared with a value of another test point. To be specific, when the speed of the PMOS transistor is high and the speed of the NMOS transistor is low, the static power consumption value of the chip is obviously large, and this meets the analysis expectation of FIG. 7. Therefore, results of FIG. 7 and FIG. 8 are consistent, indicating that the chip performance and power consumption analysis method provided in the present disclosure can accurately obtain the influence of different product device target values on the chip performance and power consumption.

The embodiment of the present disclosure also provides an analysis apparatus for chip performance, as shown in FIG. 9, FIG. 9 is a schematic structural diagram of an analysis apparatus for chip performance according to an embodiment of the present disclosure, including:

A model construction module 100 is configured to construct a standard unit model for simulating a to-be-analyzed chip standard unit;
A first parameter set obtaining module 200 is configured to obtain, through simulate the standard unit model, and simulate adjustment of a product device target value, a first influence parameter set for influence of various types of transistors on standard unit performance and standard unit power consumption under different product device target values;
A second parameter set obtaining module 300 is configured to obtain, according to the first influence parameter set and a standard unit use ratio, a second influence parameter set for influence of the various types of transistors on the chip performance and chip power consumption under the different product device target values;
A third parameter set obtaining module 400 is configured to obtain, according to the second influence parameter set and use ratios of different types of transistors, a third influence parameter set for influence of the different product device target values on the chip performance and chip power consumption, in which the third influence parameter set is used to determine influence of product device target value on the chip performance and power consumption.

Further, in an alternative implementation, the first influence parameter set includes: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation.

Further, as shown in FIG. 10, in an alternative implementation, the first parameter set obtaining module 200 includes a standard parameter value obtaining module 210, configured to through detect a standard performance parameter value and a standard power consumption parameter value of a standard unit under the standard threshold voltage, simulate the standard performance parameter value and the standard power consumption parameter value of the standard unit under a standard product device target value; and a change parameter value obtaining module, configured to: adjust a threshold voltage of a transistor in the standard unit model, and detect a general performance parameter value and a general power consumption parameter value of the standard unit under threshold voltage variation with different amplitudes, and obtain the first influence parameter set.

Further, in an alternative implementation, the use ratios of the different types of transistors include: use ratios of the different types of transistors in all transistors of the chip, or use ratios of the different types of transistors in the key path of the chip.

Further, as shown in FIG. 10, in an alternative implementation, the third influence parameter set includes: a dynamic power consumption influence parameter set, where the dynamic power consumption influence parameter set includes: a dynamic power consumption standard value of the chip under the standard threshold voltage, and a general dynamic power consumption parameter set of dynamic power consumption of the chip during the threshold voltage variation; and the third parameter set obtaining module 400 includes a dynamic power consumption obtaining module 410, configured to obtain the dynamic power consumption influence parameter set according to the second influence parameter set and the use ratios of the different types of transistors.

Further, as shown in FIG. 10, in an alternative implementation, the third influence parameter set includes: a static power consumption influence parameter set, where the static power consumption influence parameter set includes: a static power consumption standard value of the chip under the standard threshold voltage, and a general static power consumption parameter set of static power consumption of the chip during the threshold voltage variation; and the third parameter set obtaining module 400 includes: a static power consumption obtaining module 420, configured to obtain the static power consumption influence parameter set according to the second influence parameter set and the use ratios of the different types of transistors.

Further, as shown in FIG. 10, in an alternative implementation, the third influence parameter set includes: a frequency influence parameter set, where the frequency influence parameter set includes: a frequency standard value of the chip under the standard threshold voltage, and a general frequency parameter set of a frequency of the chip during the threshold voltage variation; and the third parameter set obtaining module 400 includes a frequency obtaining module 430, configured to obtain the frequency influence parameter set according to the second influence parameter set and the use ratios of the different types of transistors in the key path of the chip.

Further, as shown in FIG. 10, in an alternative implementation, the analysis apparatus for chip performance provided by the embodiment of the present disclosure further includes a drawing module 500 configured to draw a two-dimensional contour map using the third influence parameter set.

It can be seen that only the standard unit with low resource consumption during simulation is simulated, and then the influence of the transistors on the chip performance and power consumption is obtained, and next, the influence of the different types of transistors on the chip performance and power consumption is obtained. To be specific, a complete chip with high resource consumption is not simulated, but the standard unit with low resource consumption is simulated, and influence of different product device target values on the chip performance and power consumption is obtained based on use ratios of the transistors, the standard unit, and the chip, to reduce resource consumption during chip performance analysis before the chip sample is obtained, and reduce test data during chip performance analysis, so as to reduce resources input for chip performance analysis at the initial stage of manufacturing the chip on the premise of ensuring timeliness.

The embodiment of the present disclosure also provides a storage medium, which stores a design program of a chip, and when the design program is executed, the analysis method for chip performance as described above is realized.

The embodiment of the disclosure also provides a computer device, which includes the analysis apparatus for chip performance.

Although the embodiments of the present disclosure are disclosed above, the present disclosure is not limited thereto. Any person skilled in the art can make various changes and modifications without departing from the spirit and scope of this disclosure, so the scope of protection of this disclosure should be based on the scope defined by the claims.

## Claims

1. An analysis method for chip performance and chip power consumption, comprising:
constructing a standard unit model for simulating a to-be-analyzed chip standard unit;
obtaining, through simulating the standard unit model, and simulating adjustment of a product device target value, a first influence parameter set for influence of various types of transistors on standard unit performance and standard unit power consumption under different product device target values;
obtaining, according to the first influence parameter set and a standard unit use ratio, a second influence parameter set for influence of the various types of transistors on the chip performance and chip power consumption under the different product device target values; and
obtaining, according to the second influence parameter set and use ratios of different types of transistors, a third influence parameter set for influence of the different product device target values on the chip performance and chip power consumption, wherein the third influence parameter set is used to determine influence of product device target value on the chip performance and chip power consumption.

2. The analysis method for chip performance and chip power consumption according to claim 1, wherein the first influence parameter set comprises: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation.

3. The analysis method for chip performance and chip power consumption according to claim 2, wherein the standard unit performance comprises: a standard unit frequency; and the standard unit power consumption comprises: standard unit static power consumption and standard unit dynamic power consumption.

4. The analysis method for chip performance and chip power consumption according to claim 3, wherein the obtaining, through simulating the standard unit model, and simulating adjustment of a product device target value, a first influence parameter set for influence of various types of transistors on standard unit performance and standard unit power consumption under different product device target values comprises:
through detecting a standard performance parameter value and a standard power consumption parameter value of a standard unit under the standard threshold voltage, simulating the standard performance parameter value and the standard power consumption parameter value of the standard unit under a standard product device target value; and
adjusting a threshold voltage of a transistor in the standard unit model, detecting a general performance parameter value and a general power consumption parameter value of the standard unit under threshold voltage variation with different amplitudes, and obtaining the first influence parameter set.

5. The analysis method for chip performance and chip power consumption according to claim 4, wherein the standard unit use ratio comprises: a use proportion of the standard unit in the chip or a use proportion of the standard unit in a key path of the chip.

6. The analysis method for chip performance and chip power consumption according to claim 5, wherein the use ratios of the different types of transistors comprise: use ratios of the different types of transistors in all transistors of the chip, or use ratios of the different types of transistors in the key path of the chip.

7. The analysis method for chip performance and chip power consumption according to claim 6, wherein the third influence parameter set comprises: a dynamic power consumption influence parameter set,
the dynamic power consumption influence parameter set comprises: a dynamic power consumption standard value of the chip under the standard threshold voltage, and a general dynamic power consumption parameter set of dynamic power consumption of the chip during the threshold voltage variation; and
the obtaining, according to the second influence parameter set and the use ratios of the different types of transistors, the third influence parameter set for influence of the different product device target values on the chip performance comprises:
obtaining the dynamic power consumption influence parameter set according to the second influence parameter set and the use ratios of the different types of transistors.

8. The analysis method for chip performance and chip power consumption according to claim 7, wherein the use ratios of the different types of transistors further comprise: a chip power consumption ratio set.

9. The analysis method for chip performance and chip power consumption according to claim 6, wherein the third influence parameter set comprises: a static power consumption influence parameter set,
the static power consumption influence parameter set comprises: a static power consumption standard value of the chip under the standard threshold voltage, and a general static power consumption parameter set of static power consumption of the chip during the threshold voltage variation; and
the obtaining, according to the second influence parameter set and the use ratios of the different types of transistors, the third influence parameter set for influence of the different product device target values on the chip performance comprises:
obtaining the static power consumption influence parameter set according to the second influence parameter set and the use ratios of the different types of transistors.

10. The analysis method for chip performance and chip power consumption according to claim 6, wherein the third influence parameter set comprises: a frequency influence parameter set,
the frequency influence parameter set comprises: a frequency standard value of the chip under the standard threshold voltage, and a general frequency parameter set of a frequency of the chip during the threshold voltage variation; and
the obtaining, according to the second influence parameter set and the use ratios of the different types of transistors, the third influence parameter set for influence of the different product device target values on the chip performance comprises:
obtaining the frequency influence parameter set according to the second influence parameter set and the use ratios of the different types of transistors in the key path of the chip.

11. The analysis method for chip performance and chip power consumption according to claim 8, wherein the chip power consumption ratio set comprises: a proportion of the dynamic power consumption to static power consumption of the chip, and a proportion of internal power consumption of the chip to net power consumption of the chip.

12. The analysis method for chip performance and chip power consumption according to claim 1, further comprising: drawing a two-dimensional contour map using the third influence parameter set, to display influence of the different types of transistors on the chip performance.

13. An analysis apparatus for chip performance and chip power consumption, comprising:
a model construction module, configured to construct a standard unit model for simulating a to-be-analyzed chip standard unit;
a first parameter set obtaining module, configured to obtain, through simulate the standard unit model, and simulate adjustment of a product device target value, a first influence parameter set for influence of various types of transistors on standard unit performance and standard unit power consumption under different product device target values;
a second parameter set obtaining module, configured to obtain, according to the first influence parameter set and a standard unit use ratio, a second influence parameter set for influence of the various types of transistors on the chip performance and chip power consumption under the different product device target values; and
a third parameter set obtaining module, configured to obtain, according to the second influence parameter set and use ratios of different types of transistors, a third influence parameter set for influence of the different product device target values on the chip performance and chip power consumption, wherein the third influence parameter set is used to determine influence of product device target value on the chip performance and power consumption.

14. The analysis apparatus for chip performance and chip power consumption according to claim 13, wherein the first influence parameter set comprises: a standard performance parameter value of the standard unit performance and a standard power consumption parameter value of the standard unit power consumption under a standard threshold voltage; and a general performance parameter value of the standard unit performance and a general power consumption parameter value of the standard unit power consumption during threshold voltage variation.

15. The analysis apparatus for chip performance and chip power consumption according to claim 13, wherein the first parameter set obtaining module comprises:
a standard parameter value obtaining module, configured to through detect a standard performance parameter value and a standard power consumption parameter value of a standard unit under the standard threshold voltage, simulate the standard performance parameter value and the standard power consumption parameter value of the standard unit under a standard product device target value; and
a change parameter value obtaining module, configured to: adjust a threshold voltage of a transistor in the standard unit model, and detect a general performance parameter value and a general power consumption parameter value of the standard unit under threshold voltage variation with different amplitudes, and obtain the first influence parameter set.

16. The analysis apparatus for chip performance and chip power consumption according to claim 13, wherein the use ratios of the different types of transistors comprise: use ratios of the different types of transistors in all transistors of the chip, or use ratios of the different types of transistors in the key path of the chip.

17. The analysis apparatus for chip performance and chip power consumption according to claim 16, wherein the third influence parameter set comprises: a dynamic power consumption influence parameter set, wherein
the dynamic power consumption influence parameter set comprises: a dynamic power consumption standard value of the chip under the standard threshold voltage, and a general dynamic power consumption parameter set of dynamic power consumption of the chip during the threshold voltage variation; and
the third parameter set obtaining module comprises a dynamic power consumption obtaining module, configured to obtain the dynamic power consumption influence parameter set according to the second influence parameter set and the use ratios of the different types of transistors.

18. The analysis apparatus for chip performance and chip power consumption according to claim 16, wherein the third influence parameter set comprises: a static power consumption influence parameter set, wherein
the static power consumption influence parameter set comprises: a static power consumption standard value of the chip under the standard threshold voltage, and a general static power consumption parameter set of static power consumption of the chip during the threshold voltage variation; and
the third parameter set obtaining module comprises: a static power consumption obtaining module, configured to obtain the static power consumption influence parameter set according to the second influence parameter set and the use ratios of the different types of transistors.

19. The analysis apparatus for chip performance and chip power consumption according to claim 16, wherein the third influence parameter set comprises: a frequency influence parameter set, wherein
the frequency influence parameter set comprises: a frequency standard value of the chip under the standard threshold voltage, and a general frequency parameter set of a frequency of the chip during the threshold voltage variation; and
the third parameter set obtaining module comprises a frequency obtaining module, configured to obtain the frequency influence parameter set according to the second influence parameter set and the use ratios of the different types of transistors in the key path of the chip.

20. The analysis apparatus for chip performance and chip power consumption according to claim 13, further comprising: a drawing module, configured to draw a two-dimensional contour map using the third influence parameter set.

21. A storage medium, wherein the storage medium stores a design program of a chip, and when the design program is executed, the analysis method for chip performance and chip power consumption according to any one of claims 1 to 12 is implemented.

22. A computer device, comprising the analysis apparatus for chip performance and chip power consumption according to any one of claims 13 to 20.
